Europäisches Patentamt

European Patent Office

Office européen des brevets

(19)

(11) EP 0 797 547 B1

(12) EUROPEAN PATENT SPECIFICATION

(45) Date of publication and mention
of the grant of the patent:
**21.04.1999 Bulletin 1999/16**

(21) Application number: **95942105.8**

(22) Date of filing: **11.12.1995**

(51) Int Cl.6: **C03B 37/05**

(86) International application number:
**PCT/EP95/04876**

(87) International publication number:
**WO 96/18585 (20.06.1996 Gazette 1996/28)**

(54) **MANUFACTURE OF VITREOUS FIBRE PRODUCTS**

HERSTELLUNG VON GLASFASERPRODUKTEN

FABRICATION DE PRODUITS A BASE DE FIBRES VITREUSES

(84) Designated Contracting States:
**BE DE DK ES FR GB IT NL SE**

(30) Priority: **12.12.1994 GB 9425020**

(43) Date of publication of application:
**01.10.1997 Bulletin 1997/40**

(73) Proprietor: **Rockwool International A/S
DK-2640 Hedehusene (DK)**

(72) Inventors:
  • **TONDER, Flemming, Weiss
    DK-4450 Jyderup (DK)**

  • **JENSEN, Carsten
    DK-4000 Roskilde (DK)**
  • **GROVE-RASMUSSEN, Svend
    DK-4000 Roskilde (DK)**

(74) Representative:
**Lawrence, Peter Robin Broughton
GILL JENNINGS & EVERY,
Broadgate House,
7 Eldon Street
London EC2M 7LH (GB)**

(56) References cited:
**WO-A-92/12939**

## Description

This invention relates to processes by which Man Made Vitreous Fibre products (MMVF products) having a range of properties can efficiently be made using a single production line comprising one or more sets of rotating, fibre-forming rotors.

It is well known to make MMVF products from a mineral melt by pouring mineral melt on to the top rotor of a set of rotating rotors each mounted about a different substantially horizontal axis and arranged such that the melt is thrown from the top rotor on to the subsequent rotor, or each subsequent rotor in sequence, in the set so as to throw fibres off the or each subsequent rotor, collecting the fibres as a batt (generally in the presence of binder), and consolidating the batt into the desired MMVF product.

Various designs of the set of rotors are known. It is also known to have, for instance, two sets of rotors in side-by-side relationship each producing fibres, that are collected into a single batt in a single production line.

The collection of the fibres as a batt is normally achieved by carrying the fibres in air streams from the rotors on to a permeable screen, and may be followed by cross lamination to form a thicker batt. The resultant batt is then subjected to one or more consolidation steps so as to obtain a finished product having the desired density.

The consolidation steps to which the batt is subjected may include various combinations of lamination, bonding, transverse compression and compression by calendering, or other methods of consolidating in the thickness direction. They are selected to produce a finished product, generally in the form of a thick sheet, having the desired density and the desired thickness.

There are many different types of MMVF products and the production conditions are selected according to the particular type of product that is required. For instance lightweight products intended primarily for heat insulation typically have densities below around 60kg/m$^3$ and may contain relatively small amounts of binder. Products which are required to be rigid so as to enable them to be used as, for instance, structural products may have a higher density, typically above 100kg/m$^3$, and may contain larger amounts of binder. For some purposes, for instance as a horticultural growing medium, it is required to produce relatively rigid low density products.

It would theoretically be desirable to dedicate one production line to the manufacture of rigid products for which its conditions of operation have been optimised, and to dedicate another production line to the production of lightweight products for which its conditions of operation had been optimised.

Unfortunately, in commercial practice it is often not economic to dedicate a production line to the manufacture of a single type of product. Instead, it is normally necessary that any one production line should be capable of making a range of products extending from the lightest lightweight products to the heaviest rigid products.

The variations in the product quality obtainable from a single production line are usually achieved primarily by varying the amount of binder that is included and by varying the collection and consolidation conditions. Some variation in fibre characteristics can be made, for instance by changing the melt composition so as to provide a melt having different viscosity, and therefore, different fibre forming properties. However the time required to change from one melt to another normally occupies a considerable amount of production time, because of the reservoir of melt-forming components that have to be utilised before a complete change over of melt is achieved, and this is slow and inconvenient.

Accordingly it is generally necessary either to use different production lines for different products, each being optimised for a particular type of product, or to make a range of products on a single production line by varying the binder and/or the consolidation conditions but leaving the fibres substantially unchanged from one product to another. In particular, when a single production line is to be used alternately for lightweight and for rigid products, the set of rotors and the acceleration field for each rotor therefore have to be selected as a compromise that will give adequate results for both types of product, without consideration as to what fibre characteristics would give optimum performance in each individual type of product.

The set of rotors (or each set if there is more than one) is usually in a fixed location but it is known from, for instance, US-A-3,159,475 to pivot the set of rotors about a substantially horizontal axis that is substantially parallel with the axis of the rotors. Varying the position of the first subsequent rotor relative to the top rotor can influence fibre formation. The diameter of the fibres can be influenced by varying the acceleration field of the rotors. Reference can be made to for instance WO-A-92/12939, WO-A-92/12940 and WO-A-92/10436).

Customarily the rotors are driven by one or more motors mounted to one side of the rotors, for instance as shown in US-A-5,143,532. However it is also known to provide a motor coaxial with the rotor, as shown in EP-A-347418.

It would be desirable to be able to produce on a single production line both lightweight and coarser MMVF products using a substantially constant melt composition. In particular it would be desirable to be able to produce such products having fibre characteristics that are selected having regard to the optimum performance of the products rather than being dictated by the constraints imposed by the need to be able to make both types of products on a single production line.

According to the invention, we make lightweight and other MMVF products by

pouring mineral melt on to the top rotor of a set of rotating rotors each mounted about a different substantially horizontal axis and arranged such that the melt is thrown from the top rotor on to the subsequent rotor, or each subsequent rotor in sequence, in the set so as to throw fibres off the or each subsequent rotor,

collecting the fibres as a batt and

consolidating the batt, and in this process

the melt is of substantially constant composition

each rotor is individually driven at a controllable acceleration field by an individual motor associated with that rotor, and

the process is conducted alternately

(a) with the rotors driven at first acceleration fields such that the fibres produced in the process have an average fibre diameter of up to 3.5μm and the consolidation of the batt is conducted to form a lightweight product having a density of up to 60kg/m$^3$, in which process the or each subsequent rotor is driven at an acceleration field which is above 100 km/sec$^2$, and

(b) with the rotors driven at second acceleration fields selected such that the fibres produced in the process have an average fibre diameter of at least 4μm, in which process the or each subsequent rotor is driven at an acceleration field which is below 100km/sec$^2$.

The invention is based in part on the realisation that it is possible to use the same act of rotors for making entirely different types of product, and to optimise the fibre properties for each type of product, by using a set of rotors in which each rotor is individually driven at a controllable acceleration field and controlling the acceleration fields so as to obtain the fibre diameter that is optimum for that particular type of product. In particular, in the invention we can, using the same set of rotors, optimise the process to provide a lightweight product giving good heat insulation properties, as a result of having a low fibre diameter, or a high density or other more rigid product as a result of having a higher average fibre diameter.

Although it is essential in the invention that both the defined lightweight products and the products having higher fibre diameter should be made alternately using the same apparatus, as a result merely of varying the rotor acceleration fields and optionally other process features it is of course not essential that, in any one day's operation, both types of product should be made. It is merely essential that, from time to time, both types of product should be made. Also, in addition to making the defined two types of products, the same apparatus may be used for making other, intermediate, products. It may also be used for making a range of different lightweight products and/or a range of different products having the high fibre diameter.

The acceleration field, or the centripetal acceleration, of a rotor is the field G

where

$$G = r\Omega^2$$

where r is the radius of the rotor and

$\Omega$ is the angular velocity of the rotor where $\Omega = \frac{2\pi n}{60}$

where n is the revolutions per minute.

The second acceleration fields will be lower than the first acceleration fields, since increasing the acceleration field tends to reduce the average fibre diameter.

Although it is possible to perform the invention using a set of rotors having merely a top rotor and a first subsequent rotor, generally there are two, and most usually three, subsequent rotors in the set. In particular, it is preferred that the acceleration field for the or each subsequent rotor, and generally for every rotor, in process (a) is at least two times, and often at least three or four times, the acceleration field of the corresponding rotor in process (b). It can be as high as six times or in some instances at least eight times the acceleration field in process (b).

When operating in accordance with process (b), the acceleration field of the top rotor is usually below 30km/sec$^2$, for instance 5 or 8 to 20km/sec$^2$. When making lightweight products (process (a)), the acceleration field of the top rotor is usually above 40km/sec$^2$, for instance 50 to 100 or 150km/sec$^2$.

When making the coarser products (process b), the acceleration fields of the or each subsequent rotor are each below 100km/sec$^2$. The acceleration field is usually below 85km/sec$^2$. It is normally above 15 or 25km/sec$^2$. It is often preferred that the acceleration field of the final subsequent rotor should be higher than the acceleration field of the first subsequent rotor, for instance in a ratio of 1:1.2 to 1:3. The acceleration field for the final rotor is usually at least 30, and preferably at least 45 or 50km/sec$^2$ up to, for instance, 70 or 80km/sec$^2$.

When making the lightweight products in process (a), the acceleration field for the or each subsequent rotor is above 100km/sec$^2$ and often above 130km/sec$^2$. In particular, it is generally preferred that at least the final subsequent rotor has an acceleration field of at least 120km/sec$^2$, often at least 150km/sec$^2$ and sometimes above 200km/sec$^2$. It can be as high as, for instance, 350km/sec$^2$ but it is usually unnecessary for it to be more than about 300km/sec$^2$ and often it is below 250km/sec$^2$.

In all instances the acceleration field of each individual rotor is selected having regard to the fibre dimensions that are acquired in the product that is desired. In particular, the acceleration field of the top rotor, and of other rotors, is generally selected such that the amount of shot (fibres above 63μm) is below 35%, preferably being below 32% in the coarser products (process b) and below 28% in the lightweight products (process a).

The same set of rotors is utilised alternately to produce products having average fibre diameter up to around 3μm, for instance 2 to 3μm (process a) and alternately to produce products having an average fibre diameter of at least 4μm up to 5 or 5.5μm or even higher. For instance the diameter may be at least 4.5μm, often 4.7 to 4.9μm. Conveniently the process can also be operated to produce products having intermediate average fibre diameters in the range 3 to 4μm, for instance around 3.5μm.

In this specification, average fibre diameter is measured by SEM according to a length based measuring method as defined by the organization TIMA/Analytical Chimica Acta, 1993, 280-288, "Fiber diameter measurement of Bulk Man Made Vitreous Fiber". The geometrical spread is preferably about 2.

In order to vary the acceleration field of the rotors according to whether they are being used in process A, process B or in some other process, it is necessary to vary the speed of rotation of the rotors. Although the variation in the speed of the rotor can be achieved by using a fixed speed motor and gearing to allow a variable speed rotor driven by that motor, preferably the rotor is directly driven by a variable speed motor provided with means for controlling the speed of that rotor. Suitable motors of this type are frequency controlled motors. Preferably each rotor is part of a driven rotor assembly comprising the rotor, the motor, means for controlling the motor, and a drive shaft interconnecting the motor and the rotor and generally co-axial with both. The rotor speed of each rotor should be capable of being adjusted independently of the other rotors, in order to be able to optimise control of the process. However, if desired, second and third subsequent rotors may be arranged to rotate at the same speed.

In addition to varying the acceleration fields so as to give different fibre diameters, it is also possible to vary other process features so as to provide further optimisation of the fibre forming conditions according to the particular product that is required. Such other process features include melt viscosity, the position of the first subsequent rotor relative to the top rotor and any air blast that is applied over the rotors.

Changing the melt viscosity is achieved by changing the temperature of the melt, for instance by changing the ambient conditions that exist between the furnace in which the melt is formed and the top rotor. Changes in the melt composition as such may be made from time to time, but cannot be relied upon to allow alternation between process A and B. Accordingly, the melt is maintained at substantially constant compositions in the invention for sufficient time for both processes A and B to be performed utilising melt of that substantially constant composition.

The set of rotors is preferably mounted in a housing, in which event all the motors (when the motors are co-axial with the rotors) are preferably also within the housing. This housing, and thus the entire set of rotors, may be pivotable about a substantially horizontal axis which is substantially parallel to the axes of the rotors. This allows the angle beneath the horizonal of a line drawn between the centres of the top rotor and the first subsequent rotor to be varied according to the desired fibre formation properties. In particular, it is often desirable for this angle to be larger when the rotors are producing the coarser fibres than when they are producing the finer fibres. For instance the angle may be at least ten degrees larger when the rotors are producing fibres having an average diameter of at least 4.0μm than when the rotors are producing fibres having an average diameter of not more than 3.0μm. For instance, the angle may be 0 to 20, often 5 to 15 and preferably 8 to 12 degrees when producing the fine fibres and 15 to 40, often 25 to 35, degrees when producing the coarser fibres.

Each subsequent rotor is preferably provided with an air supply slot around and close to that rotor for discharging an air blast close to and substantially parallel to the periphery of the rotor with an axial component for carrying the MMV fibres axially off the periphery of the rotor, for instance as described in WO-A-92/06047. The rotation of the rotor will tend to impart some tangential component to the air stream but it is often preferred for the air blast to be provided with a tangential component, which may be substantially uniform or may vary from point to point around the rotor, for instance as described in WO-A-92/06047. If desired, the volume of the air blast and/or its orientation and/or its location relative to each rotor may be varied according to the nature of the product that is being obtained. For instance it is preferred that vanes or other means which are provided for determining the tangential or other direction of the air blast should be adjustable according to the nature of the product. Thus they may be adjustable to different angles for processes (a) and (b). For instance the air may have a high (eg 15-45°) tangential component in process (a) and a low or zero (eg 0-20°) in process (b).

Heat-curable binder is normally incorporated in the products by conventional binder application means that can be co-axial with the rotors or that may be arranged around the rotors, in conventional manner. The amount of binder that is applied for the defined lightweight products is generally in the range 10-25g, usually 10 to 20g, per kilogram mineral fibre, while the amount of binder applied for the rigid products is generally in the range 25-60g, usually 25 to 35g, per kilogram mineral fibre.

The formation of the batt may involve either direct formation of the batt in a single operation or the collection of a web followed by cross lapping of this to make an uncompressed batt, in conventional manner. The collection of the web or the batt is usually performed on a permeable screen which forms a base or end wall of a fiberising chamber through which the fibres from the rotors are carried by air which is sucked through the screen, thereby depositing the fibres on the screen. Usually there is only one set of rotors supplying fibres in the fiberising chamber, but there can be two or more sets in side-by-side relationship.

The uncompressed batt is then subjected to consolidation steps which may be conventional for the particular lightweight or rigid products that are being produced. For instance, lightweight products may be consolidated merely by simple calendering, if desired accompanied by cross-lapping or other lamination to increase thickness. Rigid products may also be made by calendering with or without lamination, the overall process being such as to provide increased compression. Thus simple calendering may be applied sufficient to give adequate compression or there can be a plurality of calendering operations. The product can be subjected to transverse compression and/or to longitudinal compression, all in conventional manner.

The consolidation conditions (and the other binding and fibre-forming conditions of the process) are selected such that lightweight products which are intended primarily for heat insulation have a density of not more than 60kg/m$^3$ often not more than about 40 or 50kg/m$^3$. Such products usually have a density of at least 20 or 30kg/m$^3$.

Preferred products of this type have a density in the range 20 to 50kg/m$^3$, an average fibre diameter in the range 2.5 to 3$\mu$m and a binder content in the range 1 to 2%.

The coarser products, made in accordance with process B, can be compressed to similar, low density, products, for instance when being used for horticultural growing media, but preferably the batt in process B is consolidated to a density of at least 100kg/m$^3$. It can be up to, for instance 250kg/m$^3$. Generally it is in the range 140 to 180 or 200kg/m$^3$. Such products are useful as rigid, structural, insulation products. A preferred product of this type have an average fibre diameter 4 to 5$\mu$m a density of 140 to 180kg/m$^3$ and a binder content of 2.5 to 3.5%.

The invention is now described with reference to the accompanying drawings in which:

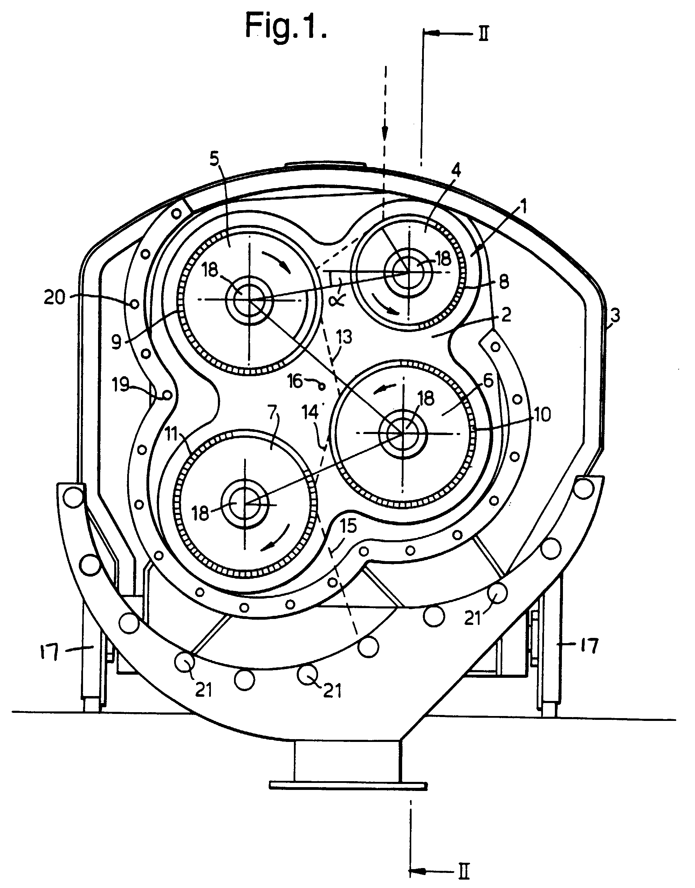

   Figure 1 is a front view of fibre-forming apparatus for use in the invention
   Figure 2 is a section on the line II - II of the apparatus shown in Figure 1.

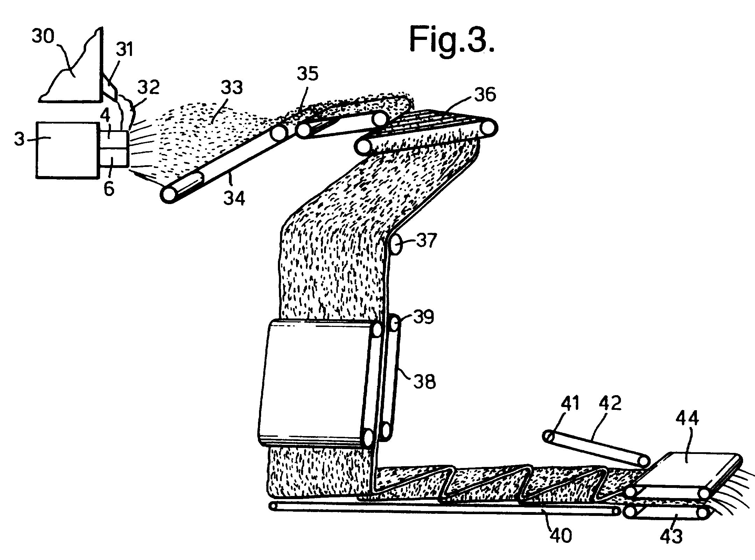

   Figure 3 is a schematic representation of typical apparatus for collecting the fibres as a batt and consolidating the batt.

The apparatus includes a set 1 of rotors each mounted on the front face 2 of a housing 3. The set is positioned at one end of a chamber to receive melt from a melt furnace. Each rotor is mounted on a driven axle that allows it to be rotated at high peripheral speed. The set consists of four rotors, a top rotor 4 that rotates anticlockwise, a second fiberising rotor (i.e., a first subsequent rotor) 5 that rotates clockwise, a third fiberising rotor 6 that rotates anti-clockwise, and a fourth fiberising rotor 7 that rotates clockwise. The bearings and drive mechanisms are not shown. Air slots 8, 9, 10 and 11 are associated with, respectively, the rotors 4, 5, 6 and 7, each slot extending around part only of the rotor. Generally each slot extends around at least 1/3 of the periphery of its associated rotor, generally around the outer part of the set of rotors. Generally it extends around not more than 2/3 or 3/4 of the periphery.

Each slot leads from an air supply chamber within the housing. The whole set of rotors is mounted to pivot about a pivot axis 16 as a result of appropriate adjustment of supports 17. The extent of pivoting typically is such that the angle a between the horizontal and a line connecting the axis of each of rotors 4 and 5 can be adjusted through a range of at least 10°, for instance between a value that may be as low as zero or 10° to a value which may be as high as 30 or 40°.

Binder may be ejected from binder-supply sprays 18 coaxial with each of the rotors and in the front face of each rotor and/or through binder supplies 19 arranged around the rotors or located in other suitable positions in conventional manner. Additional air may be forced through various air orifices 20 and 21.

The top rotor in the invention typically has a diameter in the range 100 to 250mm, often around 150 to 200mm. Each subsequent rotor in the invention generally has a diameter in the range 150 to 400mm, usually 220 to 350mm. For instance the first subsequent rotor (rotor 5) may have a diameter in the range 220 to 300mm whilst the remaining subsequent rotors may have a diameter in the range 300 to 350mm.

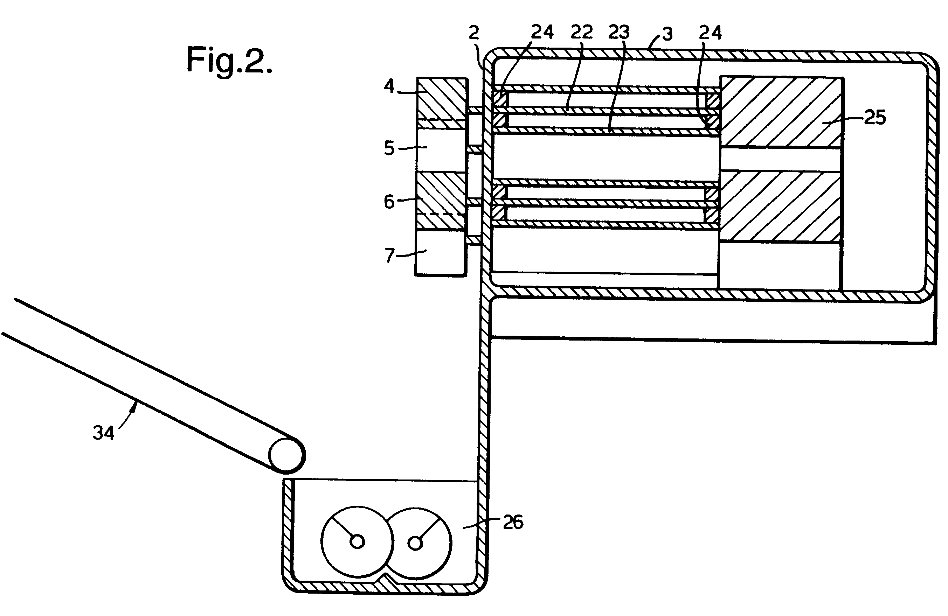

Referring to Figure 2, the housing 3 encloses the motor and drive shaft for each of the rotors. For instance rotor 4 is mounted on a shaft 22 which is enclosed within a sleeve 23 and bearings 24 and which is positively driven by a frequency controlled motor 25 having means, not shown, for varying the speed of rotation of the shaft 22 and the rotor 4. The air supply and binder supply is not shown in Figure 2.

The total production line typically comprises a furnace 30 having a melt outlet 31 that pours the melt 32 on to rotor 4 in the set of rotors mounted on the housing 3. Some of the melt is thrown off the rotor 4 as fibres or as shot, but most is thrown along path 12 on to rotor 5 which is rotating the opposite direction from rotor 4. Some is thrown off rotor 5 as fibres generally in the area of the slot 9 but the remainder is thrown along path 13 on to counter-rotating rotor 6. Some is thrown off as fibres in the general area of slot 10 while the remainder is thrown along path 14 on to counter-rotating rotor 7. A significant amount is fiberised in the general direction 15 but other melt is fiberised around the remainder of the surface of rotor 7. Shot collects in the pit 26.

The fibres and binder sprayed into the fibres are carried forward as shown at 33 and are collected on a porous inclined screen 34 which is in the base of a collection chamber (not shown). The resultant web 35 is fed from this screen to a cross lapping arrangement comprising a turn-over device 37 by which the web is turned through a right angle, over a roll 37 and between cross lapping belts 38 which reciprocate about the axes of the upper rolls 39, thereby cross lapping the web into a batt carried on a conveyor 40 to the nip 41 between a downwardly inclined upper conveyor 42 and the lower conveyor 40, by which the web 39 is gradually compressed and is then calendered between calendering belts 43 and 44. By varying the gap between the belts 42 and 40 and the belts 44 and 43, and by varying the rate of travel of the web and the batt, it is easily possible to vary the density of the product emerging from between the belts 43 and 44.

This product may be passed through an oven to cure the binder, in conventional manner.

The following is an example of the invention. In this example, rotor 4 has a diameter of 185mm, rotor 5 250mm, and rotors 6 and 7 330mm.

Operating in conventional manner with acceleration fields on rotors 4, 5, 6 and 7 of 14km/sec$^2$, 41km/sec$^2$, 80km/sec$^2$ and 94km/sec$^2$ respectively and a melt viscosity on rotor 4 of 15 poise gave a product having an average fibre diameter of 3.5μm. Binder was injected with the fibres at a rate of 1.4% followed by consolidation to a density of 30kg/m$^3$ when lightweight products were required. Binder was injected at an amount of 3.5% followed by consolidation to a density of 160kg/m$^3$ when rigid products were required.

The process was then adapted in accordance with the invention and a different melt was used, giving a melt viscosity on rotor 4 of 20 poise at the same melt temperature (1480°C).

In particular, lightweight products were made by changing the speed of the rotors 4, 5, 6 and 7 so that they gave acceleration fields of 70km/sec$^2$, 150km/sec$^2$, 200km/sec$^2$ and 270km/sec$^2$. The average fibre diameter was 2.5μm. Binder was injected at a rate of 1.4% and the batt was consolidated to a density of 30kg/m$^3$. This product gave improved thermal insulation compared to the product of similar density having a fibre diameter of 3.5μm.

Subsequently, the rotors were slowed down so that they gave acceleration fields of 14km/sec$^2$, 23km/sec$^2$, 47km/sec$^2$ and 50km/sec$^2$ respectively. The average fibre diameter was 5.0μm. Binder was injected at a rate of 3.5% and the product was consolidated to a density of 160kg/m$^3$.

The rigidity of the two products of 160kg/m$^3$ (3.5 and 5.0μm average fibre diameter) was measured according to DIN. The 3.5μm product had a rigidity of about 1,450kN/m$^2$ whilst the 5.0μm product had a rigidity of about 1,920kN/m$^2$. This demonstrates the improved rigidity obtained by increasing fibre diameter while other conditions remain unchanged.

## Claims

1. A process for making light weight and other Man Made Vitreous Fibre products by

   pouring mineral melt on to the top rotor (4) of a set (1) of rotating rotors (4, 5, 6, 7) each mounted about a different substantially horizontal axis and arranged such that the melt is thrown from the top rotor (4) on to the subsequent rotor (5), or each subsequent rotor (5, 6, 7) in sequence, in the set so as to throw mineral fibres off the or each subsequent rotor,
   collecting the fibres as a batt and consolidating the batt, characterised in that the melt is of substantially constant composition,
   each rotor is individually driven at a controllable acceleration field by an individual motor associated with that rotor, and
   the process is conducted alternately

   (a) with the rotors driven at first acceleration fields selected such that the fibres produced in the process have an average fibre diameter of up to 3.5μm and the consolidation of the batt is conducted to form a lightweight product having a density of up to 60kg/m$^3$, in which process the or each subsequent rotor is driven at an acceleration field which is above 100 km/sec$^2$, and
   (b) with the rotors driven at second acceleration fields selected such that the fibres produced in the process have an average fibre diameter of at least 4μm, in which process the or each subsequent rotor is driven at an acceleration field which is below 100 km/sec$^2$.

2. A process according to claim 1 in which the consolidation of the batt is conducted in process B to form a batt having a density of at least 100kg/m$^3$.

3. A process according to claim 2 in which the consolidation of the batt in process B is conducted to provide a density of 140 to 180kg/m$^3$.

4. A process according to claim 2 or claim 3 in which the fibre diameter in process B is 4 to 5μm and binder is incorporated in the product in an amount of 2.5 to 3.5%.

5. A process according to any preceding claim in which the fibres produced in process A have an average diameter of 2 to 3μm and the consolidation is conducted to a density of 20 to 50kg/m$^3$ and binder is included in an amount of 1 to 2%.

6. A process according to any preceding claim in which the acceleration field of the or each subsequent rotor (5, 6, 7) in process (a) is at least twice the acceleration field in process (b).

7. A process according to any preceding claim in which the acceleration field of the final rotor (7) is 45 to 70km/sec$^2$ in process (b) and 120 to 250km/sec$^2$ is process (a).

8. A process according to any preceding claim in which each rotor (4, 5, 6, 7) is part of a driven rotor assembly comprising the rotor (4), a frequency controlled motor (25), means for controlling the motor, and a drive shaft (22) interconnecting the motor and the rotor.

9. A process according to any preceding claim in which the angle beneath the horizontal of a line drawn between the centres of the top rotor (4) and the first subsequent rotor (5) is at least 10° larger in process (b) than in process (a), and the set (1) of rotors is mounted in a housing (3) pivotable about a substantially horizontal axis (16) to permit this change in angle.

10. A process according to any preceding claim in which each subsequent rotor (5, 6, 7) is provided with an air supply slot (9, 10, 11) around and close to the rotor and the air emerging from the slot has a high tangential component in process (a) and a low or zero tangential component in process (b).

**Patentansprüche**

1. Verfahren zur Herstellung von leichtgewichtigen und anderen glasartigen Kunstfasererzeugnissen durch

   Gießen einer Mineralschmelze auf den oberen Rotor (4) einer Gruppe (1) von rotierenden Rotoren (4, 5, 6, 7), die jeweils auf einer anderen im wesentlichen horizontalen Achse gelagert und derart angeordnet sind, daß die Schmelze von dem oberen Rotor (4) auf den nachfolgenden Rotor (5) oder nacheinander auf jeden nachfolgenden Rotor (5, 6, 7) der Gruppe geschleudert wird, um von dem oder jedem der nachfolgenden Rotoren Mineralfasern abzuschleudern,
   Sammeln der Fasern als Vlies und Verdichten des Vlieses,

   dadurch **gekennzeichnet,** daß die Schmelze eine im wesentlichen gleichbleibende Zusammensetzung hat, daß jeder Rotor durch einen diesem Rotor zugeordneten unabhängigen Motor bei einem steuerbaren Beschleunigungsfeld unabhängig angetrieben wird und

   daß das Verfahren alternativ durchgeführt wird

   (a) wobei die Rotoren bei ersten Beschleunigungsfeldern angetrieben werden, die derart gewählt sind, daß die bei dem Verfahren erzeugten Fasern einen durchschnittlichen Faserdurchmesser von bis zu 3,5 μm haben und daß die Verfestigung des Vlieses durchgeführt wird, um ein leichtgewichtiges Erzeugnis zu bilden, das eine Dichte von bis zu 60 kg/m$^3$ hat, bei welchem Verfahren der oder die nachfolgenden Rotoren bei einem Beschleunigungsfeld angetrieben werden, das über 100 km/sec$^2$ liegt, und
   (b) wobei die Rotoren bei zweiten Beschleunigungsfeldern angetrieben werden, die derart gewählt sind, daß die bei dem Verfahren erzeugten Fasern einen durchschnittlichen Faserdurchmesser von mindestens 4 μm haben, bei welchem Verfahren der oder die nachfolgenden Rotoren bei einem Beschleunigungsfeld angetrieben werden, das unter 100 km/sec$^2$ liegt.

2. Verfahren nach Anspruch 1, wobei die Verfestigung des Vlieses in dem Verfahren B durchgeführt wird, um ein Vlies zu bilden, das eine Dichte von mindestens 100 kg/m$^3$ hat.

3. Verfahren nach Anspruch 2, wobei die Verfestigung des Vlieses in dem Verfahren B durchgeführt wird, um eine Dichte von 140 bis 180 kg/m$^3$ zu erzielen.

4. Verfahren nach Anspruch 2 oder 3, wobei der Faserdurchmesser in dem Verfahren B 4 bis 5 μm beträgt und wobei in das Erzeugnis ein Bindemittel mit einem Anteil von 2,5 bis 3.5 % eingebracht wird.

5. Verfahren nach einem der vorhergehenden Ansprüche, wobei die bei dem Verfahren A erzeugten Fasern einen durchschnittlichen Durchmesser von 2 bis 3 μm haben und die Verfestigung bis zu einer Dichte von 20 bis 50 kg/m$^3$ durchgeführt wird und 1 bis 2 % Bindemittel enthalten sind.

6. Verfahren nach einem der vorhergehenden Ansprüche, wobei das Beschleunigungsfeld des oder jedes der nachfolgenden Rotoren (5, 6, 7) bei dem Verfahren (a) mindestens doppelt so groß ist wie das Beschleunigungsfeld bei dem Verfahren (b).

7. Verfahren nach einem der vorhergehenden Ansprüche, wobei das Beschleunigungsfeld des letzten Rotors (7) bei dem Verfahren (b) 45 bis 70 km/sec² und bei dem Verfahren (a) 120 bis 250 km/sec² beträgt.

8. Verfahren nach einem der vorhergehenden Ansprüche, wobei jeder Rotor (4, 5, 6, 7) Teil einer angetriebenen Rotorbaugruppe ist, umfassend den Rotor (4), einen frequenzgesteuerten Motor (25), Mittel zum Steuern des Motors und eine den Motor und den Rotor verbindende Antriebswelle (22).

9. Verfahren nach einem der vorhergehenden Ansprüche, wobei der Winkel, einer zwischen den Mittelpunkten des oberen Rotors (4) und des ersten nachfolgenden Rotors (5) gezogenen Linie gegenüber der horizontalen bei dem Verfahren (b) mindestens 10° größer ist als bei dem Verfahren (a) und daß die Gruppe (1) von Rotoren in einem Gehäuse (3) gelagert ist, das um eine im wesentlichen horizontale Achse 16 schwenkbar ist, um diese Winkeländerung zu ermöglichen.

10. Verfahren nach einem der vorhergehenden Ansprüche, wobei jeder nachfolgende Rotor (5, 6, 7) am Umfang und nahe beim Rotor mit einem Luftzuführschlitz 9, 10, 11 versehen ist und daß die aus dem Schlitz austretende Luft bei dem Verfahren (a) eine hohe Tangentialkomponente und bei dem Verfahren (b) eine geringe oder gar keine tangentiale Komponente hat.

**Revendications**

1. Procédé de fabrication de produits de fibres vitreuses synthétiques légères et autres par :

coulée d'une matière minérale fondue sur le rotor supérieur (4) d'un ensemble (1) de rotors rotatifs (4, 5, 6, 7) montés chacun sur un axe différent pratiquemené horizontal et disposés de manière que la matière fondue soit projetée par le rotor supérieur (4) sur le rotor suivant (5) ou chaque rotor suivant (5, 6, 7) successivement, dans l'ensemble afin que des fibres minérales soient projetées par le rotor ou chaque rotor suivant,
collecte des fibres sous forme d'un feutre, et consolidation du feutre,

caractérisé en ce que

la matière fondue a une composition pratiquement constante,
chaque rotor est entraîné individuellement dans un champ réglable d'accélération par un moteur individuel associé à ce rotor, et

le procédé est réalisé alternativement

(a) avec des rotors entraînés par des premiers champs d'accélération choisis de manière que les fibres produites dans le procédé aient un diamètre moyen pouvant atteindre 3,5 μm et la consolidation du feutre est réalisée pour la formation d'un produit léger dont la masse volumique atteint au maximum 60 kg/m³, dans ce procédé, le rotor ou chaque rotor suivant étant entraîné avec un champ d'accélération qui est supérieur à 100 km/s², et
(b) avec des rotors entraînés par des seconds champs d'accélération choisis de manière que les fibres produites dans le procédé aient un diamètre moyen d'au moins 4 μm, et, dans ce procédé, le rotor ou chaque rotor suivant est entraîné avec un champ d'accélération qui est inférieur à 100 km/s².

2. Procédé selon la revendication 1, dans lequel la consolidation du feutre est réalisée dans l'opération (b) pour la formation d'un feutre ayant une masse volumique d'au moins 100 kg/m³.

3. Procédé selon la revendication 2, dans lequel la consolidation du feutre dans l'opération (b) est réalisée pour donner une masse volumique de 140 à 180 kg/m³.

4. Procédé selon la revendication 2 ou 3, dans lequel le diamètre des fibres de l'opération (b) est compris entre 4 et 5 μm et le liant est incorporé au produit en quantité comprise entre 2,5 et 3,5 %.

5. Procédé selon l'une quelconque des revendications précédentes, dans lequel les fibres produites dans l'opération (a) ont un diamètre moyen de 2 à 3 μm et la consolidation est réalisée à une masse volumique de 20 à 50 kg/m³ et un liant est incorporé en quantité comprise entre 1 et 2 %.

6. Procédé selon l'une quelconque des revendications précédentes, dans lequel le champ d'accélération du rotor ou de chaque rotor suivant (5, 6, 7) de l'opération (a) est au moins égal au double du champ d'accélération de l'opération (b).

7. Procédé selon l'une quelconque des revendications précédentes, dans lequel le champ d'accélération du rotor final (7) est compris entre 45 et 70 km/s² dans l'opération (b) et entre 120 et 250 km/s² dans l'opération (a).

8. Procédé selon l'une quelconque des revendications précédentes, dans lequel chaque rotor (4, 5, 6, 7) fait partie d'un ensemble à rotors menés comprenant le rotor (4), un moteur (25) commandé en fréquence, un dispositif de commande du moteur et un arbre menant (22) interconnectant le moteur et le rotor.

9. Procédé selon l'une quelconque des revendications précédentes, dans lequel l'angle formé sous l'horizontale par une droite passant aux centres du rotor supérieur (4) et du premier rotor suivant (5) dans l'opération (b) est supérieur d'au moins 10° à celui de l'opération (a) et l'ensemble (1) des rotors est monté dans un boîtier (3) qui peut pivoter autour d'un axe pratiquement horizontal (16) pour permettre ce changement d'angle.

10. Procédé selon l'une quelconque des revendications précédentes, dans lequel chaque rotor suivant (5, 6, 7) comporte une fente d'alimentation en air (9, 10, 11) placée autour du rotor et près de celui-ci, et le courant d'air sortant de la fente a une composante tangentielle importante dans l'opération (a) et une composante tangentielle faible ou nulle dans l'opération (b).

# Fig.1.

Fig.2.

EP 0 797 547 B1

Fig.3.